# FASCICULE DE BREVET EUROPEEN

(11) **EP 2 600 709 B1**
(45) Date de publication et mention de la délivrance du brevet: **13.05.2015**
(21) Numéro de dépôt: 11832104.1
(22) Date de dépôt: 12.10.2011
(51) Int. Cl.: A01G 9/14, A01G 9/20

(54) **STRUCTURE DE SERRE PERMETTANT UNE EXPLOITATION SOLAIRE OPTIMISÉE**
GEWÄCHSHAUSKONSTRUKTION MIT OPTIMIERTER AUSNUTZUNG DES SONNENLICHTS
GREENHOUSE STRUCTURE FOR OPTIMIZED SOLAR EXPLOITATION

(30) Priorité: 14.10.2010 FR 1058396
(43) Date de publication de la demande: 12.06.2013
(73) Titulaire: Filclair, 13770 Venelles (FR)
(72) Inventeur: THERY, Arnauld, F-13510 Eguilles (FR)
(74) Mandataire: Domange, Maxime
(86) Numéro de dépôt international: PCT/FR2011/052379
(87) Numéro de publication internationale: WO 2012/049423

(56) Documents cités:
- EP-A1- 1 880 595
- DE-A1- 4 323 480
- FR-A1- 2 676 769

## Description

### Arrière-plan de l'invention

La présente invention se rapporte au domaine général des serres de type « chapelle » destinée à être installée en blocs « multi-chapelle » de plusieurs milliers de mètres carrés d'un seul tenant, cette serre de type « chapelle » étant constituée d'une pluralité d'unités structurelles implantées parallèlement les unes aux autres sur toute la longueur de la nef.

Un serre de ce type est connu de EP 1 880 595 A.

Typiquement, chaque unité structurelle comprenant au moins deux poteaux en acier verticaux latéraux d'une hauteur supérieure à 3,5 mètres, séparés d'une largeur de nef strictement supérieure à 9 mètres et supportant des arceaux formant toiture au niveau de leurs extrémités supérieures, ces arceaux se rejoignant au centre de la serre, les unités structurelles étant reliées les unes aux autres au niveau des extrémités supérieures des poteaux par des chéneaux longitudinaux.

Un des enjeux majeurs de développement dans le domaine des serres plastiques est la maximisation de l'énergie solaire reçue, le contrôle du climat dans la serre et le contrôle de la qualité des rayonnements reçus par les cultures.

Actuellement, des films plastiques spécifiques sont développés pour adapter l'équipement de la serre au climat de la zone d'installation.

Il existe ainsi des films diffusants permettant de diminuer la lumière directe qui peut mener à une détérioration des cultures dans les zones très ensoleillées.

Il existe aussi des films qui permettent le passage des ultraviolets.

On remarque ici que le spectre électromagnétique solaire comprend des ultraviolets, la lumière visible et des infra rouges courts. La radiation ultraviolette a une longueur d'onde comprise entre 100 et 380 nm. Ces rayons très énergétiques peuvent détruire les cellules et nuire aux plantations. Elles peuvent aussi nuire aux films plastiques. La partie des ultraviolets inférieure à 280 nm est absorbée par la couche d'ozone. Les ultraviolets présents sur terre se partagent entre les UVb (280-320 nm) et les UVa (320-400 nm). Ces rayonnements sont peu utilisés par les plantes pour leur croissance. En revanche, ils influencent fortement la formation des pigments et des aromes dans la plante. En outre, les ultraviolets favorisent une croissance plus compacte.

Une des critiques des cultures sous serre est la difficulté d'obtenir des fruits et légumes présentant des pigmentations et des aromes satisfaisants.

Cela est en particulier vrai pour les cultures sous serre en verre puisque le verre filtre fortement les ultraviolets.

Actuellement les serres plastiques sont devenues bien plus avantageuses que les serres verre grâce au bas cout de fabrication et de montage bien entendu mais aussi grâce aux qualités de culture qu'elles permettent d'atteindre.

Les films plastiques peuvent être choisis parmi ceux qui laissent passer partiellement les ultraviolets. On obtient alors des plantations plus aromatiques et plus colorées.

Les serres utilisant des parois en film plastique permettent la présence d'ultraviolets au sein de la serre. L'invention s'intéresse à l'optimisation de la circulation des ultraviolets et à l'optimisation du climat dans la serre.

### Objet et résumé de l'invention

La présente invention a donc pour but principal d'améliorer le fonctionnement des serres en terme d'exploitation solaire en proposant une serre pour laquelle les surfaces de la serre étant constituées d'une couverture transparente formé de plusieurs films plastiques formant une double paroi gonflable laissant passer les rayonnements ultraviolets au moins partiellement, les poteaux latéraux sont recouverts d'un revêtement de couleur blanche générant une réverbération des rayonnements ultraviolets.

Il est en effet connu que les surfaces de couleur blanche procurent une réverbération des ultraviolets. Ce phénomène est bien connu en mer ou en montagne, sur les glaciers notamment.

Les inventeurs ont remarqué un effet surprenant sur la circulation des ultraviolets en présence de poteaux latéraux revêtus d'un revêtement de couleur blanche au lieu de la couleur grise habituelle. Une croissance compacte est favorisée ainsi que des pigmentations et aromatisations accrues.

La seule présence des éléments verticaux blancs réverbérant les rayonnements a donc un effet dans le fonctionnement de la serre. Cela est accessible grâce à la combinaison de l'utilisation de poteaux revêtus en blanc avec des films plastiques laissant les ultraviolets pénétrer dans la serre. L'effet obtenu sur les cultures est nouveau et particulièrement intéressant dans l'optique d'améliorer la qualité des productions obtenues sous serre plastique. La problématique de la circulation des ultraviolets est en particulier un problème ignoré dans le domaine de la serre verre où les ultraviolets sont précisément filtrés.

L'intérêt existe en présence des doubles parois puisque celles-ci augmentent les phénomènes de réfraction diminuant la quantité de rayonnements pénétrant dans la serre. La circulation accrue des rayonnements grâce à la présence des poteaux blancs permet de limiter les désagréments des doubles parois en film plastique qui doublent les phénomènes de diffraction. La perte de rayonnement n'est aucunement diminuée grâce aux poteaux blancs mais en améliorant la circulation et en diminuant l'absorption des rayonnements avec les poteaux blancs, on limite les effets de ces pertes dans la serre du point de vue des cultures. Les doubles parois en film plastique permettent aussi de traiter les UV, ainsi que les autres rayonnements, de manière contrôlée grâce à la présence de charges diverses dans les plastiques constituant la double paroi.

Il est aujourd'hui connu d'incorporer des additifs anti-UV de manière variable en fonction de la durée de vie souhaitée du film et suivant la zone géographique d'utilisation. L'avantage des films plastiques est justement de permettre le contrôle de la pénétration des ultraviolets dans la serre. L'invention permet d'accéder à une amélioration de la circulation et de la gestion des ultraviolets au sein de la serre.

Le principe de la double paroi gonflable permet d'obtenir une diffusion de la lumière même lorsque deux films cristal sont utilisés. Ainsi la seule utilisation de deux films plastiques dans la double paroi gonflable transforme une partie de la lumière directe en lumière diffuse ce qui est très avantageux en combinaison avec les poteaux blancs. La lumière, comprenant l'ensemble du spectre solaire, dont des rayonnements ultraviolets, ainsi répartie d'une manière uniforme rencontre alors davantage de surfaces blanches portées par les poteaux qu'une lumière directe. En lumière directe, l'effet de l'utilisation de poteaux blancs est effectivement différent et l'avantage moins marqué.

En outre, comme la diffusion de la lumière favorise une répartition plus importante de la lumière, les poteaux blancs sont d'autant plus efficients. En effet, leurs quatre faces sont soumises à une quantité de lumière du spectre visible semblable et participent donc toutes à la recirculation de la lumière. En lumière directe, seule une face participe à cela ce qui diminue d'autant l'apport du à l'utilisation de poteaux blancs.

La combinaison d'une double paroi avec des poteaux blancs est aussi efficace pour améliorer la circulation des ultraviolets dans la serre. Des réflexions multiples ayant lieu au sein de la double paroi, cela engendre une répartition diffuse des rayonnements dont les ultraviolets. Ainsi, les ultraviolets présents rencontrent alors davantage de surfaces blanches portées par les poteaux qu'en irradiation directe. En lumière directe, l'effet de l'utilisation de poteaux blancs est effectivement différent pour le spectre visible et le spectre ultraviolet et l'avantage est moins marqué.

Cet éclairage en lumière indirecte obtenu grâce aux doubles parois empêche de comparer les serres verres avec les serres à double paroi plastique. Le fonctionnement lumineux est très différent entre une serre verre qui reçoit un pourcentage très élevé de la lumière disponible sous forme de lumière directe et une serre à double paroi plastique où un pourcentage moindre de la lumière disponible pénètre dans la serre mais dans laquelle cette lumière est disponible sous forme de lumière indirecte.

La couleur blanche permet bien sur aussi de réverbérer les autres composantes du spectre solaire et cela est très intéressant en combinaison avec le caractère diffusé de la lumière circulant à l'intérieur de la serre selon l'invention.

Notamment la partie visible du spectre solaire ayant une longueur d'onde entre 380 et 780 nm est réverbérée. Cette partie qui correspond aux couleurs violet, bleu, vert, jaune, orange et rouge est la partie la plus importante pour les plantations. Elle est dénommée PAR pour « Photosynthetic Active Radiation » en anglais (400-700 nm). Ce sont les radiations utilisées par les plantes pour la photosynthèse. L'utilisation de couleur blanche sur les poteaux a donc un effet additionnel pour la circulation des rayonnements de ces longueurs d'ondes. Néanmoins on note que cet effet était déjà connu en particulier dans les serres en verre où il arrive que les poteaux soient peints de couleur blanche.

Plus particulièrement les photons rouges et bleus sont absorbés par les pigments photosynthétiques de la plante : chlorophylle et caroténoïdes. Cette énergie est utilisée pour convertir le dioxyde de carbone et l'eau en hydrates de carbone. Ces hydrates sont utilisés pour la croissance et le maintien de la plante.

Par ailleurs, le phytochrome absorbe dans le rouge (600-700 nm) ou le rouge long (700-800 nm) suivant la forme sous laquelle il se trouve dans la plante. Ce processus influence la floraison et l'élongation des cellules de la plante.

La présence des éléments verticaux peints en blanc a aussi un effet positif sur la circulation des rayonnements à ces longueurs d'ondes.

Au-dessus de 780 nm, commence l'infra rouge court. Cette partie du spectre n'est pas absorbée par la plante mais est convertie en chaleur dans la serre.

Hormis sa capacité à augmenter la température dans la serre, ce rayonnement a une énergie faible et n'est pas nocif pour les cultures. Pendant l'hiver, ces rayonnements infrarouges ont une influence positive sur le climat grâce au réchauffement qu'ils provoquent. Par contre, ils peuvent avoir un rôle négatif pendant les périodes de fort ensoleillement en induisant un échauffement excessif de la serre et donc un desséchement du sol et de la plante. Il existe aussi des films qui réfléchissent la chaleur solaire reçue sous forme de rayonnements infrarouges. Cela assure un climat plus frais dans la serre.

La transformation des infrarouges en chaleur se fait notamment au niveau des éléments de couleur foncée présents dans la serre. Le revêtement de couleur blanche des poteaux verticaux joue alors un rôle inattendu en réfléchissant les rayonnements infra rouge, évitant que les poteaux, de teinte sombre, absorbent cette énergie et chauffent. Lors de périodes d'ensoleillement très fort, les poteaux verticaux ne sont alors plus des facteurs d'échauffement de la serre.

La présence de la double paroi gonflable permet aussi une meilleure isolation et un gain thermique par rapport aux serres verre. Des coefficients de déperdition meilleurs d'environ 25% sont observés. Il est en particulier possible de charger les films plastiques en matériau piégeant les infrarouges longs émis par le sol alors que les infrarouges courts traversent la double paroi.

On remarque enfin que l'effet esthétique obtenu avec des poteaux latéraux laqués blancs est particulièrement agréable à l'intérieur de la serre. Cela donne un aspect de haute technologie particulièrement appréciable. L'aspect hygiénique est aussi à mettre en avant d'autant que le revêtement blanc peut en outre présenter des propriétés autonettoyantes ou encore antibactériennes que ne présente pas le matériau acier galvanisé brut actuel.

Selon une caractéristique particulière, les arceaux formant voute sont également recouverts d'un revêtement de couleur blanche.

Cette caractéristique permet d'augmenter encore davantage les réverbérations d'ultraviolets. Cependant la proximité des films avec les arceaux qui les supportent peut poser des problèmes au sujet de la longévité de ceux-ci.

En effet, la double diffraction de la lumière sur l'extrados des cintres peut provoquer un vieillissement accéléré des films aux UV.

En outre, pour des raisons techniques de production, il est plus délicat de revêtir des arceaux ou d'obtenir des arceaux déjà revêtus.

Néanmoins, il est possible d'accéder, avec une telle caractéristique, à une réduction de l'échauffement de la serre importante puisque les arceaux sont les structures qui reçoivent les rayonnements solaires le plus directement et le plus longtemps.

La présence d'éléments de réverbération au niveau des voutes des serres est donc délicate d'un point de vue de la durée de vie des films. Cependant, la présence de tels éléments à l'endroit recevant le plus de rayonnements peut s'avérer tout à fait souhaitable.

Aussi, selon une caractéristique avantageuse, les unités structurelles comprenant en outre une traverse reliant les sommets de deux poteaux latéraux, ces traverses sont également recouvertes d'un revêtement de couleur blanche.

Cette caractéristique est aisée à mettre en oeuvre puisque les traverses sont généralement, comme les poteaux verticaux, de simples profilés ou de simples tubes, souvent carrés. La pose du revêtement sur de tels éléments est donc facile et peu couteuse.

En outre, la traverse est une structure qui, comme les poteaux verticaux, n'est pas en contact avec le ou les films. La réverbération est donc éloignée de ceux-ci. Elle présente néanmoins l'avantage d'être située à proximité des voutes des serres. L'absence de couleur grise au niveau de la traverse permet aussi d'éviter l'absorption de chaleur par les traverses et ainsi d'obtenir un climat moins chaud dans la serre. Cela est d'autant plus observable que la traverse reçoit les rayonnements solaires avec une incidence quasi perpendiculaire aux heures les plus chaudes.

Selon une caractéristique particulière, les unités structurelles comprenant en outre une triangulation sous la voute, cette triangulation est également recouverte d'un revêtement de couleur blanche.

Cette caractéristique permet de multiplier les éléments de réverbération des ultraviolets. En effet, les triangulations réalisées sous les voutes comprennent généralement une multiplicité de tubes offrant une surface de réverbération importante.

Selon une caractéristique particulière, au moins un des films constituant la double paroi est un film diffusant.

Cette caractéristique permet de limiter encore davantage la présence de lumière directe dans la serre tout en laissant passer les rayonnements efficaces pour les cultures. La combinaison des films diffusants avec les poteaux blancs selon l'invention permet d'encore diminuer les échauffements au sein de la serre. En outre, comme la diffusion de la lumière favorise une répartition plus importante de la lumière, les poteaux blancs sont d'autant plus efficients. La combinaison d'une double paroi comprenant au moins un film diffusant avec des poteaux blancs est particulièrement efficace pour améliorer la circulation des ultraviolets dans la serre ainsi que la circulation de la lumière visible. Le film diffusant répartit en effet la lumière de manière plus homogène qu'un film cristal par exemple.

En outre, la combinaison d'une double paroi portant un film diffusant avec les poteaux blancs selon l'invention permet de conserver un niveau lumineux satisfaisant dans la serre tout en diminuant les échauffements au sein de la serre.

Enfin, on note qu'à l'intérieur d'une serre couverte avec une double paroi dont un film est diffusant, il n'est pas possible de bien voir la couleur du ciel. Les poteaux et autres structures internes ne peuvent alors pas générer de zones d'ombrage.

La présence du film diffusant implique un éclairage indirect de la plante réparti sur toutes ses faces dans le spectre visible et ultraviolet. Cet éclairage est renforcé par les réflexions et réverbérations des rayonnements visibles et ultraviolets sur les poteaux recouverts d'un revêtement de couleur blanche assurant une réverbération des ultraviolets même très partielle d'un point de vue intensité ou répartition spectrale. L'invention trouve ici, avec un film diffusant parmi les deux films de la double paroi, sa pleine expression.

Selon une caractéristique avantageuse, les films constituant la double paroi sont des films UV transparents.

Une telle caractéristique permet d'optimiser la pénétration des UV au sein de la serre et ainsi d'assurer une croissance optimale y compris du point de vue de la pigmentation et du développement des aromes. Un film avec stabilisateur mais sans absorbeur d'UV est un film dit UV transparent (UVT). Par exemple, les films Hytithermic standard coupent les longueurs d'onde en dessous de 360 nm alors que les films Hytithermic UVT ne coupent le spectre qu'en dessous de 250 nm. Entre ces deux films, il existe d'autres types de films à propriétés intermédiaires du point de vue du comportement vis-à-vis des ultraviolets. Tous laissent passer au moins une partie des ultraviolets en intensité ou en répartition spectrale. On comprend bien ici la différence qui existe entre les doubles parois gonflables et le verre pour lequel les ultraviolets sont filtrés.

Le régime ultraviolet est très différent au sein des serres à double paroi gonflable par rapport aux serres verres et l'invention permet précisément d'optimiser ce régime. L'invention trouve ainsi sa pleine exploitation avec les films dits UV transparents. La combinaison de la double paroi UV transparente avec les poteaux blancs réverbérant au moins partiellement les ultraviolets permet d'obtenir l'expression maximale de l'originalité de l'invention et son régime optimal. Ainsi, même si la réverbération des ultraviolets assurée par les poteaux blancs est faible d'un point de vue intensité ou répartition spectrale, la quantité qui est réverbérée parvient à démultiplier la quantité d'ultraviolets présents, précisément grâce à la diffusion de ceux-ci.

Comme déjà mentionné, les UVa et UVb influencent la formation de pigments et d'aromes dans la plante. En outre, un film UV transparent aura une action favorable sur les cultures nécessitant l'intervention d'insectes pollinisateurs qui s'orientent alors mieux et travaillent davantage dans la serre. Il est aussi utile de tenir compte de la latitude de la période de l'année et des conditions météorologiques pour l'activité des abeilles et des bourdons.

Dans une réalisation avantageuse, le revêtement est réalisé par laquage.

Le laquage présente l'avantage d'offrir une qualité de surface lisse et réfléchissante. La réverbération est en effet d'autant meilleure que la surface est lisse et réfléchissante. Une telle surface est alors brillante ce qui convient particulièrement à la réverbération des ultraviolets même si elle n'est généralement que partielle. On note en effet ici que la réverbération des UV peut être observée en parallèle d'une absorption partielle de ceux-ci.

La facilité de mise en oeuvre d'un laquage est aussi parfaitement adaptée à l'obtention de poteaux ou autres structures de serres revêtus d'un revêtement blanc.

Avantageusement, le laquage est réalisé par projection électrostatique d'une laque de base résine de polyester.

Cette caractéristique est particulièrement adaptée pour revêtir des poteaux en acier galvanisé. Avantageusement, le revêtement subit une cuisson. Une telle cuisson sera typiquement effectuée pendant une durée allant de quelques minutes à environ une heure sous une température entre 150° et 220°C. La cuisson permet la polymérisation et la stabilisation du revêtement.

Selon une caractéristique particulière, les films constituant la double paroi ont des qualités optiques distinctes sur la paroi extérieure et sur la paroi intérieure.

Le contrôle des rayonnements permis par une telle caractéristique est particulièrement intéressant dans le cadre de l'invention où il s'agit d'optimiser la circulation des différents rayonnements. En contrôlant en effet les photons et la quantité des photons en présence au sein de la serre, l'invention prend tout son sens pour assurer la circulation de ceux-ci et son amélioration. Typiquement, il sera avantageux que le film supérieur présente des qualités diffusantes et que le film intérieur soit un film cristal anti-buée, les deux films présentant par ailleurs des perméabilités aux UV identiques et des qualités thermiques semblables.

Selon une caractéristique avantageuse de l'invention, le rapport faite sur largeur de nef de la voute est inférieur à 1/5.

Un tel rapport de dimension de la voute permet d'optimiser l'ensoleillement en particulier en diminuant les ombres portées matinales et vespérales. Cela assure ainsi un éclairage optimal des poteaux latéraux pour les incidences solaires les plus basses. En outre, pour assurer un effet cheminée satisfaisant, les hauteurs de poteaux latéraux doivent être augmentés pour garder un profil aplati de la voute de la serre. Cette augmentation de la hauteur des poteaux revêtus de blanc, qui peut être nécessitée par le profil aplati de la voute, pour assurer un effet cheminée correct, permet d'augmenter la surface de réverbération des ultraviolets dans la serre.

### Description détaillée d'un mode de réalisation

Le fonctionnement de deux types de serres, l'une comportant des poteaux latéraux blancs et l'autre des poteaux latéraux gris, couleur acier galvanisé a été expérimentalement observé.

Le revêtement blanc des poteaux latéraux est un laquage effectué, après dégraissage et lavage des structures à revêtir, selon un procédé de projection électrostatique (« POWDER COATING » en anglais) d'une peinture de base résine de polyester chargée en pigments blancs. La peinture utilisée est la référence Interpon D1094 HR Brillante de la société Akzo Nobel Industrial Paints. Ainsi que signalé ci-dessus, le caractère brillant de la peinture utilisée permet une particulièrement bonne réverbération des ultraviolets même si elle n'est que partielle en terme de répartition spectrale ou si une partie de l'intensité est absorbée en parallèle.

Le prétraitement du support est donc unique avant le laquage à la poudre. Après dégraissage et décapage, les éléments sont prétraités avec une couche de passivation exempte de chrome à base de zirconium destinée au besoin à protéger les éléments en aluminium éventuels contre la corrosion. Celle-ci sert également de couche d'accrochage de la laque.

Les éléments sont immergés dans différents bains de façon à leur fournir la protection optimale tant interne qu'externe. Afin de garantir celle-ci, la concentration de produits chimiques des bains de prétraitement est contrôlée régulièrement. Après séchage des éléments, une couche de polyester thermodurcissable de 60 à 80 microns d'épaisseur est appliquée lors du laquage électrostatique à la poudre. La polymérisation de celle-ci a lieu ensuite dans un four à une température entre 170°C et 210°C sur une durée allant respectivement de 40 minutes à 4 minutes.

Un revêtement blanc de base résine de polyester est ainsi obtenu après cuisson au four à 170°C pendant une durée prédéterminée, ici de 40 minutes, adaptée à la polymérisation et à la stabilisation du revêtement.

Les deux types de serre ont été munis de doubles parois. Le film supérieur est un film diffusant et le film intérieur est un film cristal anti buée. Les deux films sont des films dits thermiques c'est-à-dire chargés en EVA, pour Ethyle, Vinyle, Acétate. Les deux films plastiques présentent une perméabilité aux UV.

Les deux types de serre sont des serres présentant un rapport faite sur largeur de nef de la voute égal à 0,143 avec des ouvrants sur chéneaux. On remarque que la présence des ouvrants sur chéneaux n'est pas une caractéristique critique pour la mise en oeuvre de l'invention qui pourrait tout aussi bien avoir été mise en oeuvre dans des serres présentant un simple ou double ouvrant sur faitage. L'effet global de la présence des poteaux blancs serait en effet semblable.

Les poteaux blancs sont des réflecteurs de la lumière indirecte présente dans la serre sur tout le spectre électromagnétique incluant la lumière visible et les longueurs d'onde ultraviolettes et infrarouges.

Des cultures spécifiques de salades à coloration rouge naturelle ont été effectuées sous les deux types de serre. Ainsi que généralement observé dans la pratique, les cultures de salades ont présentés une problématique d'homogénéité en colorimétrie sous le type de serre présentant des poteaux gris. Une grande partie des salades est sortie verte de la serre.

Sous les serres selon l'invention, il a été observé un gain remarquable en termes de d'homogénéité en colorimétrie sur les cultures de salades. Il a aussi été observé une couleur moyenne plus intense par rapport aux mêmes cultures effectuées sous l'autre type de serre. La qualité de texture a aussi été comparée. Les améliorations ne se sont pas montrées quantifiables.

En matière aromatique, les salades sous serre selon l'invention se sont avérées avoir développé, en moyenne, une amertume plus prononcée.

En parallèle, des mesures de température des poteaux dans les serres ont été effectuées pour comparer leur échauffement. Il a ainsi été observé un maximum de 17°C de différence en journée, sous des conditions d'ensoleillement et de températures extérieures comparables, entre les poteaux revêtus d'un revêtement de couleur blanche du type de serre selon l'invention et les poteaux laissés bruts de l'autre type de serre.

Il existe aussi un avantage de l'invention lié aux problèmes de corrosion fréquents en pied de poteaux et dues à l'utilisation de produits chimiques mal contrôlés dans la serre. Cet avantage reste marginal par rapport à l'impact sur la lumière mais demeure intéressant. Le laquage évite effectivement le problème de la rouille de l'acier.

En effet, l'utilisation d'acier pour les poteaux latéraux entraine des phénomènes de rouille blanche et/ou rouge. Pour cela l'acier utilisé est généralement galvanisé. La rouille blanche est une attaque superficielle du zinc qui apparait principalement sur les poteaux. Cette attaque se produit notamment lors du transport ou du stockage exposé à la pluie des poteaux, ceux-ci étant colisées en fardeaux. Le zinc se trouve alors en atmosphère confiné, oxydante, puisque souvent les poteaux sont de section carrés. La rouille blanche se développe alors et se transforme rapidement en rouille rouge.

Il a été envisagé de revêtir les poteaux qui sont les seules éléments de la structure de la serre en contact avec le sol. En effet, leurs portions basses subissent les phénomènes spécifiques à ce contact dont des phénomènes d'oxydation. Une résine transparente de protection enduit parfois les poteaux pour contrer ce phénomène. La couche de zinc est alors typiquement protégée avec un vernis. Un tel vernis a montré ses qualités en ce qui concerne la corrosion. Il est donc tout à fait souhaitable de munir les poteaux d'un revêtement les isolant des attaques acides et autres provenant du contact avec le sol.

L'utilisation d'un laquage blanc selon l'invention directement sur l'acier galvanisé permet de combiner les avantages de la protection contre la corrosion et les avantages propres à l'invention concernant l'amélioration de l'exploitation du spectre solaire dans la serre.

L'objet de l'invention permet en outre d'obtenir la lumière exploitable pour la photosynthèse maximum grâce à la diffraction de la lumière diffusée sur le laquage blanc des poteaux. Un des avantages de la lumière « indirecte », obtenue grâce à la double paroi et, ici, encore davantage puisque la double paroi comprend un film diffusant, sur la lumière directe est de minimiser ou d'annuler les zones d'ombres d'une lumière directe. Le laquage blanc des poteaux renforce cet effet.

Les propriétés de réflectance des poteaux laqués sont en effet utilisées de manière optimale dans une serre où règne une lumière indirecte. En effet, cette lumière indirecte est alors réfléchie par les quatre faces du poteau. De ce fait, non seulement le poteau ne crée pas d'ombre portée mais il devient aussi comme « transparent » à la lumière. Les ultraviolets et les longueurs d'onde visibles sont ainsi réverbérés par les quatre faces.

Les poteaux sont des structures éloignées des films et la réverbération des ultraviolets qu'ils provoquent n'est pas nuisible à la tenue des films plastiques. D'autres structures comme les traverses placées au sommet des poteaux latéraux peuvent avantageusement aussi être revêtues d'un revêtement blanc. Elles présentent alors un échauffement moindre sous ensoleillement et, en outre, participent à améliorer la circulation des ultraviolets dans la serre. Comme elles sont éloignées aussi des films plastiques cela ne nuit pas non plus à la tenue de ceux-ci.

Dans certains cas particuliers, il peut être utile de revêtir aussi d'un revêtement blanc les triangulations placées sous la voute. On limite alors l'échauffement de ces structures qui représentent généralement une surface importante. La proximité des films rend cependant l'utilisation d'une telle caractéristique légèrement défavorable en termes de durée de vie des films. Cependant, comme seule une partie des ultraviolets reçue est généralement réverbérée, cela n'apparait pas être critique en terme de longévité d'utilisation des films.

On remarque enfin que diverses mises en oeuvre peuvent être réalisées selon les principes de l'invention. En particulier, le mode de réalisation décrit l'utilisation d'un laquage des poteaux latéraux. D'autres types de revêtements peuvent être mis en oeuvre pour réaliser l'invention en teintant les poteaux latéraux avec un revêtement blanc générant une réverbération des rayonnements ultraviolets partielle.

## Revendications

1. Serre de type « chapelle » destinée à être installée en blocs « multi-chapelle » de plusieurs milliers de mètres carrés d'un seul tenant, cette serre de type « chapelle » étant constituée d'une pluralité d'unités structurelles implantées parallèlement les unes aux autres sur toute la longueur de la nef, chaque unité structurelle comprenant au moins deux poteaux en métal verticaux latéraux, séparés d'une largeur de nef et supportant des arceaux formant toiture au niveau de leurs extrémités supérieures, ces arceaux se rejoignant au centre de la serre, les unités structurelles étant reliées les unes aux autres au niveau des extrémités supérieures des poteaux par des chéneaux longitudinaux,
les surfaces de la serre étant constituées d'une couverture transparente formé de plusieurs films plastiques formant une double paroi gonflable **caractérisé en ce que**, les films plastiques laissent passer les rayonnements ultraviolets au moins partiellement, et les poteaux latéraux sont recouverts d'un revêtement de couleur blanche générant une réverbération des rayonnements ultraviolets.

2. Serre selon la revendication 1, **caractérisé en ce que** les arceaux formant voute sont également recouverts d'un revêtement de couleur blanche.

3. Serre selon l'une des revendications précédentes, **caractérisé en ce que**, les unités structurelles comprenant en outre une traverse reliant les sommets de deux poteaux latéraux, ces traverses sont également recouvertes d'un revêtement de couleur blanche.

4. Serre selon l'une des revendications précédentes, **caractérisé en ce que**, les unités structurelles comprenant en outre une triangulation sous la voute, cette triangulation est également recouverte d'un revêtement de couleur blanche.

5. Serre selon l'une des revendications précédentes, **caractérisé en ce que** au moins un des films constituant la double paroi est un film diffusant.

6. Serre selon l'une des revendications précédentes, **caractérisé en ce que** les films constituant la double paroi sont des films UV transparents.

7. Serre selon l'une des revendications précédentes, **caractérisé en ce que** le revêtement blanc sur les poteaux est réalisé par laquage qui confère une surface lisse et réfléchissante.

8. Serre selon la revendication 7, **caractérisé en ce que** le laquage est réalisé par projection électrostatique d'une laque de base résine de polyester.

9. Serre selon l'une des revendications précédentes, **caractérisé en ce que** le revêtement subit une cuisson.

10. Serre selon l'une des revendications précédentes, **caractérisé en ce que** les films constituant la double paroi ont des qualités optiques distinctes sur la paroi extérieure et sur la paroi intérieure.

11. Serre selon l'une des revendications précédentes, **caractérisé en ce que** le rapport faite sur largeur de nef de la voute est inférieur à 1/5.

## Patentansprüche

1. "Schiff"-artiges Treibhaus, das dazu bestimmt ist, in "mehrschiffigen" Blöcken von mehreren Tausend Quadratmetern in einem Stück aufgestellt zu werden, wobei dieses "Schiff"-artige Treibhaus aus einer Vielzahl von Struktureinheiten besteht, die parallel zueinander über die gesamte Länge des Schiffes angeordnet sind, wobei jede Struktureinheit wenigstens zwei vertikale Seitenpfosten aus Metall umfasst, die um eine Schiffbreite getrennt sind und die im Bereich ihrer oberen Enden eine Bedachung bildende Bögen tragen, wobei diese Bögen in der Mitte des Treibhauses zusammentreffen, wobei die Struktureinheiten im Bereich der oberen Enden der Pfosten durch Längsdachrinnen miteinander verbunden sind, wobei die Oberflächen des Treibhauses von einer transparenten Abdeckung gebildet sind, welche von mehreren eine aufblasbare Doppelwand bildenden Kunststofffolien gebildet ist,
**dadurch gekennzeichnet, dass** die Kunststofffolien die UV-Strahlen wenigstens teilweise hindurch lassen und die Seitenpfosten mit einer weißfarbenen Beschichtung, die eine Rückstrahlung der UV-Strahlen erzeugt, überzogen sind.

2. Treibhaus nach Anspruch 1, **dadurch gekennzeichnet, dass** die ein Gewölbe bildenden Bögen ebenfalls mit einer weißfarbenen Beschichtung überzogen sind.

3. Treibhaus nach einem der vorhergehenden Ansprüche, **dadurch gekennzeichnet, dass**, da die Struktureinheiten ferner eine Traverse, welche die höchsten Punkte von zwei Seitenpfosten verbindet, umfassen, diese Traversen ebenfalls mit einer weißfarbenen Beschichtung überzogen sind.

4. Treibhaus nach einem der vorhergehenden Ansprüche, **dadurch gekennzeichnet, dass**, da die Struktureinheiten ferner eine Dreiecksversteifung unter dem Gewölbe umfassen, diese Dreiecksversteifung ebenfalls mit einer weißfarbenen Beschichtung überzogen ist.

5. Treibhaus nach einem der vorhergehenden Ansprüche, **dadurch gekennzeichnet, dass** wenigstens eine der Folien, die die Doppelwand bilden, eine Streufolie ist.

6. Treibhaus nach einem der vorhergehenden Ansprüche, **dadurch gekennzeichnet, dass** die die Doppelwand bildenden Folien transparente UV-Folien sind.

7. Treibhaus nach einem der vorhergehenden Ansprüche, **dadurch gekennzeichnet, dass** die weiße Beschichtung auf den Pfosten durch Lackieren hergestellt wird, das eine glatte und reflektierende Oberfläche verleiht.

8. Treibhaus nach Anspruch 7, **dadurch gekennzeichnet, dass** das Lackieren durch elektrostatisches Spritzen eines polyesterharzbasierten Lacks vollzogen wird.

9. Treibhaus nach einem der vorhergehenden Ansprüche, **dadurch gekennzeichnet, dass** die Beschichtung einem Brennen unterzogen wird.

10. Treibhaus nach einem der vorhergehenden Ansprüche, **dadurch gekennzeichnet, dass** die die Doppelwand bildenden Folien unterschiedliche optische Eigenschaften auf der Außenwand und auf der Innenwand aufweisen.

11. Treibhaus nach einem der vorhergehenden Ansprüche, **dadurch gekennzeichnet, dass** das Verhältnis First zu Schiffbreite des Gewölbes kleiner als 1/5 ist.

## Claims

1. A greenhouse of the "span" type for installing in "multi-span" blocks of several thousands of square meters in a single piece, this "span" type greenhouse being constituted by a plurality of structural units installed parallel to one another over the entire length of the bay, each structural unit comprising at least two lateral vertical metal posts spaced apart by a bay width and supporting roof-forming arch segments at their top ends, the arch segments meeting in the center of the greenhouse, the structural units being connected together at the top ends of the posts via longitudinal gutters, the surfaces of the greenhouse being constituted by a transparent covering made up of a plurality of plastics films forming an inflatable double wall, the greenhouse being **characterized in that** the plastics films allow ultraviolet rays to pass at least in part, and the side posts are covered with a white-colored coating generating reverberation of ultraviolet rays.

2. A greenhouse according to claim 1, **characterized in that** the roof-forming arch segments are also covered in a coating of white color.

3. A greenhouse according to either preceding claim, **characterized in that** the structural units further include a cross-member interconnecting the tops of two side posts, these cross-members also being covered in a coating of white color.

4. A greenhouse according to any preceding claim, **characterized in that** the structural units further include a truss under the roof, the truss also being covered in a coating of white color.

5. A greenhouse according to any preceding claim, **characterized in that** at least one of the films constituting the double wall is a diffusing film.

6. A greenhouse according to any preceding claim, **characterized in that** the films constituting the double wall are UV-transparent films.

7. A greenhouse according to any preceding claim, **characterized in that** the white coating on the posts is made by lacquering, thereby imparting a surface that is smooth and reflective.

8. A greenhouse according to claim 7, **characterized in that** the lacquering is performed by electrostatically spraying a lacquer based on polyester resin.

9. A greenhouse according to any preceding claim, **characterized in that** the coating is subjected to baking.

10. A greenhouse according to any preceding claim, **characterized in that** the films constituting the double wall have distinct optical qualities for the outer wall and for the inner wall.

11. A greenhouse according to any preceding claim, **characterized in that** the ratio of the ridge over the bay width of the roof is less than 1/5.
